# EUROPÄISCHE PATENTSCHRIFT

(11) **EP 1 072 571 B1**
(45) Veröffentlichungstag und Bekanntmachung des Hinweises auf die Patenterteilung: **02.04.2003**
(21) Anmeldenummer: 00115702.3
(22) Anmeldetag: 21.07.2000
(51) Int. Cl.: C04B 41/49

(54) **Verfahren zur Hydrophobierung von keramischen Oberflächen und derart hergestellte keramische Körper**
A method of hydrophobising ceramic surfaces and ceramic bodies obtained thereof
Procédé pour rendre hydrophobe des surfaces céramiques et corps céramiques ainsi obtenus

(30) Priorität: 28.07.1999 DE 19935077
(43) Veröffentlichungstag der Anmeldung: 31.01.2001
(73) Patentinhaber: ERLUS BAUSTOFFWERKE AG, 84088 Neufahrn (DE)
(72) Erfinder: Dendl, Peter, Dr., 93049 Regensburg (DE); Interwies, Jan, 84034 Landshut (DE); Lienert, Matthias, 84088 Neufahrn (DE)
(74) Vertreter: LOUIS, PÖHLAU, LOHRENTZ & SEGETH

(56) Entgegenhaltungen:
- EP-A- 0 358 011
- EP-A- 0 610 831
- EP-A- 0 849 332

## Beschreibung

Die Erfindung betrifft ein Verfahren zur Hydrophobierung von grobkeramischen Oberflächen von Dachziegeln, sowie derart behandelte Dachziegel.

Von in der Bautechnik verwendeten grobkeramischen Gegenständen, zum Beispiel von Dachziegeln oder Ziegeln aus Ton, wird u.a. Atmungsfähigkeit gefordert. Diese ist durch ein beim Brennvorgang sich einstellendes Kapillargefüge gewährleistet und führt dazu, daß in den Keramikkörper eingedrungene Feuchtigkeit in Trockenzeiten aufgrund der Kapillarwirkung rasch an die Oberfläche transportiert und durch Abtrocknen entfernt wird. Zugleich ist es jedoch erwünscht, die Wasseraufnahmefähigkeit von keramischen Oberflächen dieser Art möglichst weitgehend zu begrenzen, um die in den Keramikkörper eindringende Feuchtigkeitsmenge von vornherein gering zu halten. Hierzu ist es insbesondere von Dachziegeln seit langem bekannt, deren Oberflächen zu hydrophobieren, um aufgrund der wasserabweisenden Eigenschaft der Oberflächen ein rasches Abfließen von Regen- und Schmelzwasser zu erreichen. Üblicherweise erfolgt das Hydrophobieren oder Imprägnieren durch Polysiloxane, die meist in einem Tauchverfahren auf die Oberflächen aufgebracht werden. Es ist auch bekannt, die hydrophobe Eigenschaft dadurch zu steigern, daß auf die Oberflächen ein feines Pulver, z. B. aus Tonpartikeln, mittels einer organischen Silikonharzlösung aufgebracht und anschließend durch Aushärten des Silikonharzes fixiert wird (CH-A 268 258, DE 197 46 053 A1).

Um durch die Hydrophobierung der keramischen Oberflächen deren Atmungsfähigkeit nicht zu beeinträchtigen, erfordern die Auswahl der zur Hydrophobierung herangezogenen Polysiloxane und der Verfahrensablauf Sorgfalt. Denn eine zu dichte Belegung der Oberfläche und insbesondere der freien Flächen des Kapillargefüges kann zu einer Verringerung des zur Verfügung stehenden Atmungsquerschnitts führen. Deshalb gilt es bei der Hydrophobierung der in Betracht gezogenen keramischen Oberflächen stets einen Kompromiß zwischen Atmungsfähigkeit und Begrenzung der Wasserdurchlässigkeit zu schließen.

Die Wasseraufnahmefähigkeit verbunden mit der Neigung aufgenommenes Wasser aufgrund fehlender Atmungsfähigkeit zu halten bestimmt weiterhin die Frostbeständigkeit von grobkeramischen Oberflächen, insbesondere von Dachziegeln. Um die Frostbeständigkeit zu verbessern, d. h. die Wasserdurchlässigkeit herabzusetzen, werden keramische Oberflächen dieser Art in der geschilderten Weise hydrophobiert und häufig auch, verbunden mit einer besonderen gewünschten Farbgebung, glasiert. Die Glasur führt in der Regel zu einem weitgehend dichten Abschluß der Oberfläche gegen eindringendes Wasser. Jedoch können geringfügige Risse oder mechanische Beschädigungen der Glasur ein Eindringen von Wasser doch ermöglichen, das in Folge der Glasur dann aber sehr lange gehalten wird.

Aufgabe der Erfindung ist es daher, ein einfach zu handhabendes Verfahren zur Hydrophobierung grobkeramischer Oberflächen von Dachziegeln vorzuschlagen, das eine gute hydrophobe Eigenschaft der Oberflächen ergibt, die Wasserdurchlässigkeit verringert, die Atmungsfähigkeit der Oberflächen aber nicht oder nur unwesentlich herabsetzt.

Erfindungsgemäß wird diese Aufgabe gelöst durch das Vorgehen gemäß Patentanspruch 1.

Als anorganisch-organische Hybridpolymere kommen Verbindungen in Betracht, die ein molekulares oder nanostrukturiertes Basismaterial mit anorganischen und organischen Elementen aufweisen (vgl. "First European Workshop on Hybrid Organic-Inorganic Materials - Centre National de la Recherche Scientifique, Chäteau de Bierville, 8.-10. November 1993). Solche Hybridpolymere sind bekannt unter dem Markennamen ORMOCER des Fraunhofer-Instituts für Silikat ISC, Würzburg oder durch die Firma nanogate GmbH, Saarbrücken. Hergestellt werden die Hybridpolymere überwiegend durch Hydrolyse und Kondensation von Kieselsäureestern und Metallalkoholaten als Grundmaterialien. Spezielle Eigenschaften erhalten diese Systeme durch den Einbau von organisch modifizierten Kieselsäurederivaten in das Silikat-Netzwerk. Dadurch können gezielt erwünschte Eigenschaften eingestellt werden und außerdem bewirken die organischen Anteile den Aufbau eines organischen Polymer-Netzwerks.

Weiters wird als hier einsehlägigen Stand der Technik auf EP-A-358011, EP-A-610 831 und die EP-A-849 332 verwiesen. Danach werden "anorganisch - organische Hybridpolymere" als Beschichtüngsmittel für keramische Sübstrate verwendet.

Die Hybridpolymere können in Wasser oder Lösemitteln dispergiert oder gelöst werden, so daß das Auftragen auf die zu behandelnde Oberfläche mit den üblichen Beschichtungstechniken wie Tauchen, Schleudern, Gießen oder Spritzen möglich ist. An das Auftragverfahren schließt sich ein Trocknungs- oder Härtungsprozeß an, der durch thermische Behandlung oder mit Hilfe von UV- oder Wärmestrahlung durchführbar ist. Je nach Bestimmungsart der Hybridpolymere kann die thermische Behandlung und Trocknung zwischen Raumtemperatur und 400°C durchgeführt werden.

Die Beschichtung keramischer glasierter Oberflächen mit anorganisch-organischen Hybridpolymeren dieser Art, beispielsweise im Sanitärbereich, ist bereits bekannt. Die vorliegende Erfindung beruht jedoch auf der Erkenntnis, daß solche Hybridpolymere auch an grobkeramischen Oberflächen, von denen geringe Wasserdurchlässigkeit verbunden mit Atmungsfähigkeit gefordert ist, ohne Beeinträchtigung der Atmungsfähigkeit zur Hydrophobierung herangezogen werden können. Offenbar wird dies dadurch erreicht, daß die die Hybridpolymere aufbauenden Teilchen eine Größe im Nano-Bereich haben und entsprechend dünne, jedoch wirksame Schichten bilden können. Deshalb werden die Porenöffnungen des Kapillargefüges der keramischen Oberfläche und die freien Flächen des Kapillargefüges nahe der Oberfläche im Inneren des Keramikkörpers nicht verlegt und der dadurch gebildete Atmungsquerschnitt nicht erheblich herabgesetzt.

Weiterhin hat sich überraschend gezeigt, daß die Hybridpolymere auch an nicht glasierten keramischen Oberflächen, die naturgemäß eine feinporöse Struktur des Keramikmaterials aufweisen, mit einer beträchtlichen Abtragfestigkeit gebunden werden können. Die bekannte Bindung der Hybridpolymere bei den genannten glasierten Keramikoberflächen im Sanitärbereich wird einer Bindung von Komponenten des Silikat-Netzwerks an die SiO₂-Anteile der Glasur zugesprochen, die bei nicht glasierten keramischen Oberflächen fehlt. Offenbar gehen die Hybridpolymere bei der erfindungsgemäßen Behandlung auch grobkeramischer Oberflächen eine Bindung an SiO₂-Reste des Keramikmaterials ein, die zu der unerwarteten Haftfestigkeit führen.

Die Hybridpolymere dieser Art haben weitere Eigenschaften, die sie auch für die Verwendung zur Hydrophobierung von keramischen Oberflächen geeignet machen. So besteht keine Gefahr, daß dadurch Farben der Oberflächen verändert oder beeinträchtigt werden, weil die Hybridpolymere aufgrund der Kleinheit ihrer Teilchen die Reflexionsfähigkeit der Oberflächen nicht beeinträchtigen. Weiterhin wird durch die hydrophoben und lipophoben Gruppen, die in Hybridpolymere dieser Art "eingebaut" werden können, eine deutliche Selbstreinigungseigenschaft der dadurch behandelten keramischen Oberflächen erzielt. Deshalb kann damit gerechnet werden, daß Dachziegel, die erfindungsgemäß behandelte keramische Oberflächen aufweisen, allein durch Regen (oder durch gezielte Berieselung mit Wasser) von Schmutz frei bleiben. Darüber hinaus sind die Hybridpolymere sehr UV- und witterungsbeständig, wodurch die stark hydrophobe Eigenschaft der keramischen Oberflächen sehr lang erhalten bleibt.

Nach einer Weiterbildung des erfindungsgemäßen Verfahrens ist vorgesehen, daß neben der Behandlung der keramischen Oberfläche mit dem anorganisch-organischen Hybridpolymer auch eine Behandlung mit einem bewuchshemmenden Mittel (Antifouling-Mittel) durchgeführt wird. Grundsätzlich könnte das bewuchshemmende Mittel neben dem Hybridpolymer in der Trägerflüssigkeit, mit der die keramische Oberfläche behandelt wird, enthalten sein. Als solche Mittel kommen diejenigen in Betracht, die in bekannten Antifouling-Farben zum Einsatz kommen, z. B. Kupfer-, Zink- oder Zinnpräparate. Um aber die vorstehend beschriebenen Vorteile der Hybridpolymere auszunützen, ist vorzuziehen, daß bewuchshemmende Gruppen oder Radikale der genannten Verbindungen unmittelbar in das Netzwerk der Hybridpolymere eingebunden sind.

Die im Rahmen des erfindungsgemäßen Verfahrens eingesetzten Hybridpolymere können neben ihrer hydrophoben Eigenschaft auch auf hohe mechanische Widerstand- und Haftfestigkeit ausgelegt werden. Ihr Einsatz ist sogar zur Erhöhung der Kratzfestigkeit von glatten Oberflächen bekannt. Daher haften sie nach der Trocknung bzw. Aushärtung so fest an der behandelten keramischen Oberfläche, daß keine Beeinträchtigung der erzielten hydrophoben Eigenschaft durch mechanische Abtragung zu befürchten ist. So können beispielsweise erfindungsgemäß behandelte Dachziegel in üblicher Weise transportiert und nach dem Eindecken auch begangen werden.

Die starke hydrophobe Eigenschaft und die damit verbundene Fähigkeit zur Selbstreinigung der erfindungsgemäß behandelten grobkeramischen Oberflächen von Dachziegeln, führt zu einer ständigen Freihaltung der Oberfläche von insbesondere fettigem Schmutz und Ruß, d. h. von Verunreinigungen, die vor allem in Industriegegenden zu erwarten sind. Verunreinigungen dieser Art setzen häufig die gewünschte Atmungsfähigkeit herab und fördern dadurch die Neigung aufgenommenes Wasser länger zu halten ohne daß im gleichen Maß die Wasseraufnahmefähigkeit verringert wird. Damit wird die Frostbeständigkeit der keramischen Oberflächen verschlechtert. Durch die genannte Freihaltung der Oberflächen von Verschmutzungen dieser Art wirkt die erfindungsgemäße Behandlung selbst bei glasierten grobkeramischen Oberflächen, da hierdurch anstehendes Wasser und dessen Eindringen in eventuell vorhandene mechanische Beschädigungsstellen oder Sprünge der Glasur vermieden wird.

## Patentansprüche

1. Verfahren zur Hydrophobierung von keramischen Oberflächen von Dachziegeln, bei dem eine grobkeramische Oberfläche mit einer ein anorganisch-organisches Hybridpolymer enthaltenden Flüssigkeit behandelt und anschließend getrocknet wird, wobei ein anorganisch-organisches Hybridpolymer eingesetzt wird, das aus Teilchen mit einer Größe im Nano-Bereich aufgebaut ist und dünne wirksame Schichten bildet, die die Porenöffnungen des Kapillargefüges der keramischen Oberfläche im Inneren des Keramikkörpers nicht verlegt, so daß der dadurch gebildete Atmungsquerschnitt nicht erheblich herabgesetzt wird.

2. Verfahren nach Anspruch 1,
**dadurch gekennzeichnet,**
**dass** die Oberfläche während einer Zeitdauer behandelt wird, die ein Eindringen der Flüssigkeit in das oberflächennahe Kapillargefüge des die Oberfläche aufweisenden Keramikkörpers erlaubt.

3. Verfahren nach Anspruch 1 oder 2,
**dadurch gekennzeichnet,**
**dass** die Flüssigkeit auch eine als bewuchshemmendes Mittel wirksame Verbindung enthält.

4. Verfahren nach Anspruch 3,
**dadurch gekennzeichnet,**
**dass** die als bewuchshemmendes Mittel wirksame Verbindung an das Hybridpolymer gebunden ist.

5. Keramikkörper, als Dachziegel ausgebildet, mit einer ein Kapillargefüge aufweisenden hydrophobierten Oberfläche,
**dadurch gekennzeichnet,**
**dass** die grob keramische Oberfläche des Dachziegels mit einem anorganisch-organischen Hybridpolymer behandelt ist, das aus Teilchen mit einer Größe im Nano-Bereich aufgebaut ist und daraus dünne wirksame Schichten gebildet sind, die die Porenöffnungen des Kapillargefüges der keramischen Oberfläche im Inneren des keramischen Körpers nicht verlegen, so daß der dadurch gebildete Atmungsquerschnitt nicht erheblich herabgesetzt ist.

6. Keramikkörper nach Anspruch 5,
**dadurch gekennzeichnet,**
**dass** das Hybridpolymer auch die freien Flächen des oberflächennahen Kapillargefüges im Inneren des Keramikkörpers bedeckt.

7. Keramikkörper nach Anspruch 5 oder 6,
**dadurch gekennzeichnet,**
**dass** das Hybridpolymer eine bewuchshemmende Verbindung enthält.

## Revendications

1. Procédé pour rendre hydrophobes des surfaces céramiques de tuiles de toits, du type dans lequel une surface céramique brute est traitée par un liquide contenant un polymère hybride organique/non organique, puis est séchée, dans lequel est amené en place un polymère hybride organique/non organique qui est constitué de petites particules d'une taille de l'ordre du nanomètre et y forment des couches minces actives qui n'obstruent pas les ouvertures de pores de la structure capillaire de la surface céramique à l'intérieur du corps céramique de telle sorte que la section de respiration ainsi formée n'est pas considérablement diminuée.

2. Procédé selon la revendication 1, **caractérisé en ce que** la surface est traitée durant une période de temps qui permet une pénétration du liquide dans le système capillaire superficiel du corps céramique qui présente la surface à traiter.

3. Procédé selon la revendication 1 ou 2, **caractérisé en ce que** le liquide contient également un composé actif en tant qu'agent de retardement de croissance.

4. Procédé selon la revendication 3, **caractérisé en ce que** le composé actif en tant qu'agent de retardement de croissance est lié au polymère hybride.

5. Corps céramique en forme de tuile de toit comportant une surface rendue hydrophobe possédant une structure capillaire, **caractérisé en ce que** la surface céramique brute de la tuile de toit est traitée par un polymère hybride organique/non organique, qui est constitué par de petites particules d'une taille de l'ordre du nanomètre et qui forme des couches minces actives qui n'obstruent pas les ouvertures de pores de la structure capillaire de la surface céramique dans l'intérieur du corps céramique, de telle sorte que la section de respiration ainsi formée n'est pas considérablement diminuée.

6. Corps céramique selon la revendication 5, **caractérisé en ce que** le polymère hybride recouvre également les surfaces libres du système capillaire superficiel dans l'intérieur du corps céramique.

7. Corps céramique selon la revendication 6 ou 7, **caractérisé en ce que** le polymère hybride contient un composé constituant un agent de retardement de croissance.

## Claims

1. Process for hydrophobicizing ceramic surfaces of roofing tiles, in which an as-fired ceramic surface is treated with a liquid containing an inorganic-organic hybrid polymer and is subsequently dried, where the inorganic-organic hybrid polymer used is composed of particles having a size in the nanometer range and forms thin effective layers which do not coat the pore openings of the capillary microstructure of the ceramic surface in the interior of the ceramic body so that the breathing cross section formed thereby is not appreciably reduced.

2. Process according to Claim 1, **characterized in that** the surface is treated for a time which allows penetration of the liquid into the capillary microstructure close to the surface of the ceramic body.

3. Process according to Claim 1 or 2, **characterized in that** the liquid additionally contains a compound effective as antifouling agent.

4. Process according to Claim 3, **characterized in that** the compound effective as antifouling agent is bound to the hybrid polymer.

5. Ceramic body in the form of a roofing tile having a hydrophobicized surface having a capillary microstructure, **characterized in that** the as-fired ceramic surface of the roofing tile has been treated with an inorganic-organic hybrid polymer which is composed of particles having a size in the nanometer range and has formed thin effective layers which do not close the pore openings of the capillary microstructure of the ceramic surface in the interior of the ceramic body so that the breathing cross section formed thereby is not appreciably reduced.

6. Ceramic body according to Claim 5, **characterized in that** the hybrid polymer also covers the free areas of the capillary microstructure close to the surface in the interior of the ceramic body.

7. Ceramic body according to Claim 5 or 6, **characterized in that** the hybrid polymer contains an antifouling compound.
